(19) Europäisches Patentamt
European Patent Office
Office européen des brevets

(11) EP 3 203 641 B1

(12) EUROPEAN PATENT SPECIFICATION

(45) Date of publication and mention
of the grant of the patent:
**05.12.2018 Bulletin 2018/49**

(51) Int Cl.:
*H04B 1/525* [(2015.01)]   *H04B 1/04* [(2006.01)]
*H04B 1/18* [(2006.01)]   *H04B 1/3822* [(2015.01)]

(21) Application number: **16154684.1**

(22) Date of filing: **08.02.2016**

(54) **A FILTER AND A METHOD FOR ISOLATING TERMINALS IN A TRANSCEIVER FRONT END**

FILTER UND VERFAHREN ZUR ISOLIERUNG VON ANSCHLÜSSEN EINER FRONTBAUGRUPPE EINES ÜBERTRAGERS

FILTRE ET PROCÉDÉ PERMETTANT D'ISOLER DES TERMINAUX DANS UN CIRCUIT FRONTAL D'UN TRANSMETTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.08.2017 Bulletin 2017/32**

(73) Proprietors:
• **Bayerische Motoren Werke Aktiengesellschaft**
**80809 München (DE)**
• **Analog Devices, Inc.**
**Norwood, MA 02063 (US)**

(72) Inventors:
• **Posselt, Adrian**
**80939 München (DE)**
• **Böhm, Christian**
**94371 Rattenberg (DE)**

(74) Representative: **2SPL Patentanwälte PartG mbB**
**Postfach 15 17 23**
**80050 München (DE)**

(56) References cited:
**WO-A1-2008/023096   WO-A2-2014/133625**
**US-A1- 2005 207 509   US-A1- 2009 227 213**
**US-B1- 7 671 720**

**Description**

**Field**

Embodiments relate to a filter and a method for at least partially isolating or insulating a third terminal of a filter from a first terminal of the filter.

**Background**

In many fields of technology, wireless communication protocols are used to send, receive or exchange data in the widest sense including, for instance, audio and video data to name just a few examples. The data may be digitally encoded or may be based on an analog transmission scheme depending on the technology, the transmission scheme and the protocols involved.

In many cases, a receiver circuit and a transmitter circuit share a common infrastructure such as a common antenna or a common wiring which may lead to the transmitter circuit interfering with the receiver circuit due to its transmission activities. For instance, due to a transmission of the transceiver circuit, a signal to be transmitted may couple into the receiver circuit due to an unintentional or parasitic coupling of the signal to be transmitted over the common infrastructure. This may lead to a poor signal-to-noise-ratio (SNR), an overload of a component of the receiver circuit leading, for instance, to clipping, or other unwanted effects.

The transmitter circuit as well as the receiver circuit are by far not required to operate according to the same technology, transmission protocol or in the same frequency range or frequency band. Often interference effects may occur even when the transmitter circuit and the receiver circuit operate in different frequency ranges or frequency bands, which are in the vicinity of one another, or when an integer multiple of a frequency used in one of the frequency ranges or frequency bands falls into the other frequency range or frequency band, respectively. In these cases, the signal to be transmitted by the transceiver circuit may represent a blocker or another interfering signal for the receiver circuit.

Situations like these occur, for instance, in vehicle-related, aeronautic or maritime applications including, for instance, cars, buses, trucks, trains and ships, when a receiver circuit and a transmitter circuit for the same or different wireless technologies share a common infrastructure. For instance, in the case of a multimedia system of a car, a common exterior antenna may be used for simultaneously sending and receiving different signals which are transmitted and received by different circuits, modules or components of such a multimedia system, respectively. However, also in the case of interior antennas similar challenges may exist, for instance, when mobile systems such as mobile computers or cellphones of one or more passengers of the car are operated inside the car. The larger the vehicle, the more severe these problems may become. For instance, in larger buses a large number of mobile devices may be operated simultaneously, exchanging signals with the corresponding system of the bus.

Therefore, a demand exists to at least partially isolate the receiver circuit from disturbances caused by the transmitter circuit via a common or shared infrastructure.

However, not only in vehicle-related applications does such a demand exist, but also in other fields of technology such as mobile devices or non-vehicle related applications.

Conventionally, analog filters are used to reduce interference effects on the receiver circuit side. For instance, the EP 2 498 332 A1 describes a variable filter and communication apparatus, while the US 2002/0032788 A1 describes a method and means for transmitting data of different quality of service internet protocol diagrams. The EP 2 254 195 A1 describes a tunable bandpass filter. Nevertheless, these solutions are typically less frequency agile and less flexible in terms of their frequency responses such that long-term changes concerning transmission protocols may eventually require exchanging hardware components.

Document WO 2008/023096 A1 describes a concept for an RFID reader. Signals leaking from a transmitter side to a receiver side in the RFID reader are compensated by creating a compensation signal on the basis of knowledge of signal components of a transmitted signal leaking to a receiver side of the RFID reader. Document WO 2014/133625 A2 discloses a passive cancellation network. A passive feed forward cancellation circuit passively cancels at least a portion of an undesired leakage from a transmit signal in a receive signal in a feed forward manner. Document US 2009/0227213 A1 relates to a compensation circuit for suppressing crosstalk between a transmission path and a reception path of an RFID-reader unit. A compensation path has at least one variable phase shifter and at least one variable attenuator for varying a signal portion of a carrier in phase and amplitude. Document US 2005/0207509 A1 describes an apparatus with a transmitter, a receiver, an antenna and a signal cancellation circuit. The signal cancellation circuit is coupled to the transmitter, the receiver and the antenna. The signal cancellation circuit is configured to phase shift a first portion of a transmit signal to produce a phase-shifted signal. The signal cancellation circuit is configured to combine the phase-shifted signal with a second portion of the transmitter signal to produce a combined signal. The second portion of the transmitter signal is associated with a reflection of a third portion of the transmitter signal from the antenna. Document US 7,671,720 B1 describes an RFID interrogator utilizing a circuit to remove unwanted distortion from a received signal. The interrogator transmits a signal continuously, while receiving a received signal from an RFID tag. The circuit samples the transmitted signal, and removes the unwanted distortion created by the transmitted signal from the received signal.

**Summary**

Therefore, a demand exists in many fields of technology to improve a trade-off between an isolation/insulation of a receiver circuit from a commonly used infrastructure shared with a transmitter circuit, frequency agility and flexibility in terms of frequency response.

This demand is satisfied by a filter and a method for at least partially isolating or insulating a third terminal of a filter from a first terminal of the filter according to any of the independent claims.

A filter according to an embodiment comprises a first terminal, a second terminal, and a third terminal, a circulator coupled with a first terminal to the first terminal of the filter, with a second terminal to the second terminal of the filter and with a third terminal to the third terminal of the filter, and a controllable analog phase-shifter circuit coupled with an input to the first terminal of the filter and with an output to the third terminal of the filter, wherein the phase-shifter circuit is configured to generate, based on an analog radio-frequency input signal provided to the first terminal of the filter, a phase-shifted signal shifted by a predetermined phase shift in the phase domain to couple the phase-shifted signal or a signal or a signal derived from the phase-shifted signal to the third terminal of the filter.

By controlling the predetermined phase shift, a filter according to an embodiment may allow a signal coupled from the first terminal to the third terminal of the filter via the circulator to be at least partially attenuated or even removed by an at least partial destructive interference of the signal coupled from the first terminal to the third terminal via the circulator and the phase-shifted signal. This may allow at least partially isolating or insulating the first terminal from the third terminal of the filter.

The controllable analog phase-shifter circuit may operate in the phase domain. In contrast to a circuit operating in the time domain, in which the propagation time of a signal and its component is influenced, the phase-shifter circuit immediately influences the phase of the corresponding signal or its components. While in the case of a phase shift caused in the time domain, the delay time and the corresponding frequency shift are essentially linear with respect to the frequency, the phase shift caused by the controllable analog phase-shifter circuit comprises typically a non-linear dependency on the frequency with respect to the signal provided to the phase-shifter circuit or its components. Under ideal circumstances, which may be difficult to achieve, the phase shift is independent of the frequency.

A terminal is a point at which a conductor or conductive structure from an electrical component, device, structure or network provides a point of access to electrically connect another component, device, structure, network or external circuit. A terminal may, for instance, simply be the end or an accessible portion of a wire or of a conductive structure in the case of a semiconductor-based implementation, or it may be fitted with a connector, bond pad, pin or fastener, just to name some examples.

The circulator may be a clockwise circulator which may be configured to transmit an analog radio-frequency signal from the first terminal of the circulator to the second terminal of the circulator and an analog radio-frequency signal from the second terminal of the circulator to the third terminal of the circulator. It may further be configured to at most transmit an analog radio-frequency signal from the second terminal of the circulator to the first terminal of the circulator in an attenuated form and to at most transmit an analog radio-frequency signal from the third terminal of the circulator to the second terminal of the circulator in an attenuated form. In the case of a three terminal clockwise circulator, the circulator may further be configured to transmit an analog radio-frequency signal from the third terminal of the circulator to the first terminal of the circulator, while at most transmitting an analog radio-frequency signal from the first terminal of the circulator to the third terminal of the circulator in an attenuated form. The term "clockwise" here merely refers to the numbering or designation of the terminals of the circulator and not to their geometrical arrangement. For instance, the terminals of the clockwise circulator may be arranged geometrically clockwise, geometrically anticlockwise or in any other fashion. Moreover, the clockwise circulator is by far not required to comprise two or three terminals only, but may be comprise any number of terminals larger than two. Obviously, an anticlockwise or counterclockwise circulator may as well be applicable in some embodiments with accordingly adapted terminal numbering and designation.

To at least partially destructively interfere or superimpose, the signal coupled from the first terminal of the filter to the third terminal of the filter via the circulator and the phase-shifted signal or the signal derived from the phase-shifted signal may comprise at a target or notch frequency a relative phase shift to one another of approximately 180° or $\pi$ and having approximately the same amplitude when being coupled to the third terminal of the filter. The closer the relative phase difference between the phase-shifted signal and the signal coupled from the first terminal to the third terminal of the filter via the circulator is equal to 180° and the more equal the amplitudes of the two signals are, the better the quality of the destructive interference and, hence, the attenuation of the signal component at the target or notch frequency is. However, attenuating a signal component at the target or notch frequency does not require the relative phase difference and the amplitudes of the two signals to be precisely 180° and to be equal, respectively.

The phase-shifter circuit may be configured to generate at its output a phase-shifted signal shifted by the predetermined phase shift in the phase domain with respect to the signal provided to its input. The signal provided to the first terminal of the filter may, as indicated earlier, be referred to as the input signal.

Optionally, the phase-shifter circuit may be configured to generate the phase-shifted signal with the phase shift being controllable by at least one control signal. This may allow the filter to be adapted to different operational conditions, for instance, depending on the input signal provided to the first terminal of the filter. This may allow the filter to react more quickly and more flexibly to changes of the signal provided to the first terminal of the filter.

Optionally, the phase-shifter circuit may further be configured to generate the phase-shifted signal with an amplitude being controllable by the at least one control signal. This may allow improving a degree of destructive interference or superposition at the notch or target frequency even further by allowing the amplitude of the phase-shifted signal to be more precisely matched to the amplitude of the signal coupled from the first to the third terminal of the filter via the circulator.

Additionally or alternatively, the filter may further comprise a control circuit configured to generate the at least one control signal such that the predetermined phase shift and a time delay of the analog radio-frequency input signal provided to the first terminal of the filter and coupled to the third terminal of the filter via the circulator corresponds to a predetermined target or notch frequency of the filter causing the signal coupled to the third terminal via the circulator and the phase-shifted signal to at least partially destructively interfere at the target or notch frequency. Such a frequency response of the filter may correspond to a notch filter, a comb filter in terms of multiple or even repetitive notches, respectively. The control circuit may allow a more compact design of the filter and an easier implementation into an existing system.

Optionally, the control circuit may be configured to generate the at least one control signal such that the signal coupled to the third terminal via the circulator and the phase-shifted signal essentially completely destructively interfere or superimpose at the notch frequency, at multiple notch frequencies (comb characteristic), respectively. For instance, the control circuit may be configured to generate the at least one control signal such that the amplitude of the phase-shifted signal essentially corresponds to the amplitude of the signal coupled to the third terminal via the circulator at the notch frequency such that the signals essentially completely destructively interfere at the notch frequency.

Additionally or alternatively, the control circuit may comprise a digital-to-analog converter (DAC) and a digital processing unit, wherein the digital-to-analog converter is configured to generate the at least one control signal based on a digital signal generated by the digital processing unit. This may allow a very flexible implementation of the filter by controlling the filter by a software or a program. The digital processing unit may, for instance, comprise a central processing unit (CPU) or another processor-based circuit.

Additionally or alternatively, the phase-shifter circuit may comprise a vector modulator. This may allow a comparably simple implementation allowing a higher degree of accuracy concerning the predetermined phase shift independent of the actual frequency of the input signal provided to the first terminal of the filter.

Optionally, the vector modulator may be configured to generate the phase-shifted signal with a phase shift being controllable by an I-control signal and a Q-control signal. By controlling the I- control signal and the Q-control signal it may be possible to not only control the phase shift but also the amplitude of the phase-shifted signal.

Additionally or alternatively, the filter may further comprise a splitter coupled with an input to the first terminal of the filter, with a first output to the first terminal of the circulator and with a second output to the input of the phase-shifter circuit. The splitter may in this case be configured to split an analog radio-frequency signal provided to its input into at least a first signal at its first output and a second signal at its second output. This may allow a comparably simple implementation. It may also allow improving an accuracy of the filter since the phase-shifter circuit may directly operate on a part of the signal provided to the first terminal of the filter.

The circulator may be configured to receive at its first terminal the first signal or a signal derived from the first signal. The phase-shifter circuit may be configured to receive at its input the second signal or a signal derived from the second signal.

Optionally, the splitter may comprise a power splitter. The power splitter may be configured to split the analog radio-frequency input signal into the first and second signals comprising spectral densities being essentially proportional to one another with respect to at least one of a power and an amplitude on a linear or a logarithmic scale as a functional frequency. Moreover, the spectral densities of at least one of the first signal and the second signal may be proportional to a spectral density of the input signal with respect to at least one of a power and an amplitude on a linear or logarithmic scale as a functional frequency. Each of these proportionalities may be valid only a finite reference frequency range, for instance a payload frequency range of the input signal.

To name just one example, the power splitter may, for instance, be configured to split the input signal into the first and second signals comprising essentially the same power with respect to the reference frequency range. However, the power splitter may also be configured to split the input signal into the first and second signals comprising a ratio of the power of the first signal to the second signal, which is different from one. For instance, the ratio may be at least 2, 5 or 10. Depending on the implementation, the expected operational conditions, it may be beneficial in some circumstances to provide the phase-shifter circuit with enough power to allow the signal to be attenuated at the notch frequency even under adverse conditions. However, in the case of an implementation of a power splitter the energy provided to the phase-shifter circuit is "lost" or not available for the signal to be transmitted. In other words, it may also be beneficial under some circumstances to limit the power provided to the phase-shifter circuit for efficiency reasons.

Additionally or alternatively, the filter may further comprise a coupler coupled with a first input to the third terminal of the circulator, with a second input to the output of the phase-shifter circuit and with an output to the third terminal of the filter. The coupler may then be configured to generate an output signal based on the phase-shifted signal from the phase-shifter circuit and based on an analog radio-frequency signal coupled from the first terminal of the filter to the third terminal of the filter via the circulator. Independent of one another, the coupler may be directly or indirectly coupled to the circulator as well as directly or indirectly coupled to the phase-shifter circuit.

Optionally, the coupler may comprise a power coupler. This may allow a simpler implementation of the filter. Optionally, the power coupler may be identical to the power splitter.

However, the power coupler may also differ from the power splitter. The coupler may be configured to generate the output signal based on the signal coupled from the first terminal of the filter to the third terminal of the filter via the circulator and the phase-shifted signal by super-positioning, summing or adding the signals. The coupler and the splitter may be implemented according to the application's need. Independently of one another, the coupler may be directly or indirectly coupled to the circulator and/or the phase-shifter circuit.

Additionally or alternatively, the first terminal of the filter may be configured to be coupled to an output of a transmitter circuit of a transmitter or a transceiver to receive the analog radio-frequency input signal to be transmitted, wherein the second terminal of the filter may be configured to be coupled to an antenna, and wherein the third terminal of the filter may be configured to be coupled to an input of a receiver circuit of a receiver, of the transceiver or a further transceiver to provide an analog radio-frequency output signal to be received to the receiver circuit. A transceiver typically comprises at least one receiver circuit and at least one transmitter circuit, which may, however, share components, circuits or other pieces of infrastructure.

Optionally, the receiver circuit may be configured to operate according to a different protocol, a different technology or a different standard compared to the transmitter circuit. This may allow the filter to be used as a node to couple receiver circuits and transmitter circuits operating according to different standards of protocols to a common antenna including, for instance, its wiring. A filter may therefore allow simplifying an implementation of a more complex system comprising at least one receiver circuit and at least one transmitter circuit.

Additionally or alternatively, the filter may be configured such that the analog radio-frequency input signal comprises at least one of a plurality of frequencies and a finite frequency range. In other words, the filter is by far not required to be operational only with respect to a single frequency, but may be configured to be operational with respect to a frequency range, bandwidth or a plurality of frequencies. The term "plurality" refers to at least two of the objects, entities or characteristics referred to by the term. In yet other words, the filter may be configured such that the analog radio-frequency input signal comprises at least one of a plurality of frequencies and a finite frequency range.

A system according to an embodiment comprises a filter according to the above description, a transmitter circuit coupled with an output to the first terminal of the filter, and a receiver circuit coupled to the third terminal of the filter. The system may further comprise an antenna coupled to the second terminal of the filter.

Electrical, electronical and other components can be coupled to one another directly or indirectly in such a way that information carrying or informing comprising signals can be interchanged or sent from one component to the other component. Moreover, electrical and other components can be electrically coupled directly or indirectly to provide them with electrical energy, for instance, by providing a supply voltage and a supply current to the respective components.

Information carrying signals or information comprising signals can be sent, provided or interchanged, for instance, using electrical, optical, magnetic or radio signals. The signals can be in terms of their values and their timely sequence independent from one another be discrete or continuous. For instance, the signals may be analog or digital signals.

Mechanical components may be coupled to one another directly or indirectly via a further component.

A method according to an embodiment for at least partially isolating a third terminal of a filter from a first terminal of a filter comprises coupling an analog radio-frequency input signal from a first terminal of the filter via a first terminal of a circulator to a second terminal of the filter coupled to the second terminal of the circulator, generating, based on the input signal at the first terminal of the filter, a phase-shifted signal shifted by a predetermined phase shift in the phase domain, and coupling the phase-shifted signal or a signal derived from the phase-shifted signal and, via the circulator, the input signal from the first terminal of the filter to the third terminal of the filter.

A method according to an embodiment may, as outlined before, allow at least partially isolating or insulating the third terminal of the filter, to which a receiver circuit may be coupled, from a first terminal of the filter, to which a transmitter circuit may be coupled. As outlined before, a frequency component at a notch frequency may be eliminated by adjusting the predetermined phase shift of the phase-shifted signal in order to at least partially destructively interfere with the corresponding frequency component coupled from the first terminal of the filter to the third terminal of the filter via the circulator.

Coupling the phase-shifted signal or a signal derived from the phase-shifted signal and, via the circulator, the input signal from the first terminal of the filter to the third terminal of the filter may comprise generating an output signal based on these signals. Generating the output signal may comprise super-positioning, superimposing, summing or adding these signals.

Additionally or alternatively, the method may further comprise determining the predetermined phase shift, wherein generating the phase-shifted signal comprises generating the phase-shifted signal phase-shifted by the determined phase shift in the phase domain.

**Brief description of the Figures**

In the following, embodiments will be described and explained in more detail with reference to the enclosed Figures.

Fig. 1 shows a simplified block diagram of a system comprising a filter according to an embodiment;

Fig. 2 shows a block diagram of a system comprising a filter according to a further embodiment;

Fig. 3 shows a block diagram of a vector multiplier; and

Fig. 4 shows a flowchart of a method according to an embodiment.

**Detailed Description**

Various examples and embodiments will now be described in more detail with reference to the enclosed Figures, which illustrate some examples and embodiments. In the Figures, the thicknesses of the lines, layers and regions may be exaggerated for clarity.

In the Figures identical or similar reference signs refer to identical or similar objects, elements, or processes throughout the description, which may be implemented identically or in a modified form with respect to one characteristic, some characteristics or even all characteristics. Details and examples relating to one object, element or process described in the context of one embodiment or one Figure may be transferred to other embodiments or Figures, unless explicitly or, for instance for technical reasons, implicitly excluded.

Today, vehicles have to offer the possibility of connecting to a large number of wireless services to provide services, for instance, for assistance, safety and infotainment application inside the vehicle. Each radio system including, for instance, broadcasting, telematics and global navigation satellite system (GNSS) for positioning are served by dedicated electronic control units (ECU). These ECUs have to work in coexistence during simultaneous use of multiple systems both in transmitting and receiving modes. This decentralized approach leads to an increased complexity and effort for system integration, especially with regard to coexistence and interference of different subsystems.

Vehicles, such as cars, buses, trucks, trains and ships, represent a field of application for systems utilizing multiple wireless technologies simultaneously. Nevertheless, also in other fields of applications a demand exists to transmit and receive radio communications at the same time. Although in the following the emphasis will be laid on vehicle-related applications, embodiments are by far not limited to this field of application or field of technology.

In addition to these challenges from a system's perspective, wireless communication systems are often subjected to rapid changes. For instance, an increasing number of services need to be simultaneously processed. Moreover, an assignment and extension of available operating frequencies in parallel operation of possibly complementary and competing technologies may require a sophisticated coexistence management, which can today only be provided by complex filter structures in the analog domain. Resolving interference scenarios may be necessary in the analog domain before digitization as otherwise mixer stages or analog-digital-converters (ADCs) may be overdriven. This might cause, for instance, clipping and other disturbances which may lead to an unacceptable signal-to-noise radio (SNR) or other unwanted effects.

For instance, transmissions based on cellular services like GSM, UMTS, LTE from the vehicle's telematics unit may interfere with a signal reception of terrestrial digital video broadcasting (DVB-T) services. Conventionally, steeply-shouldered bandpass filters may be used, which may, however, be less favorable in terms of flexible, country-related specifications and similar parameters. Moreover, to prevent disruptions between a base station of a cellular network and the customer's cellphone, conventionally, filter concepts depending on the mobile network operator specification are implemented. However, these implementations typically are not as flexible and typically do not possess the frequency agility, which may be desirable for future applications.

Conventionally, filters may be used for resolving such coexistence issues. However, these filter structures often require expensive and steeply-shouldered bandpass filters to be implemented. These mentioned components typically have frequency-fixed properties so that the opportunities to implement flexibility in terms of future connectivity architectures may be limited. Moreover, an overall system performance may be less favorable when using today's filter technologies for resolving common coexistence issues between cellular communication systems, which allow both transmitting and receiving, and wireless broadcasting technologies, which allow receiving only.

Although in the previous explanations reference has always been made to digitally encode transmission schemes, embodiments are by far not limited to the use in the context of digital transmission schemes only. For instance, analog transmission and modulation schemes like airband or other analog transmission schemes may equally well be used.

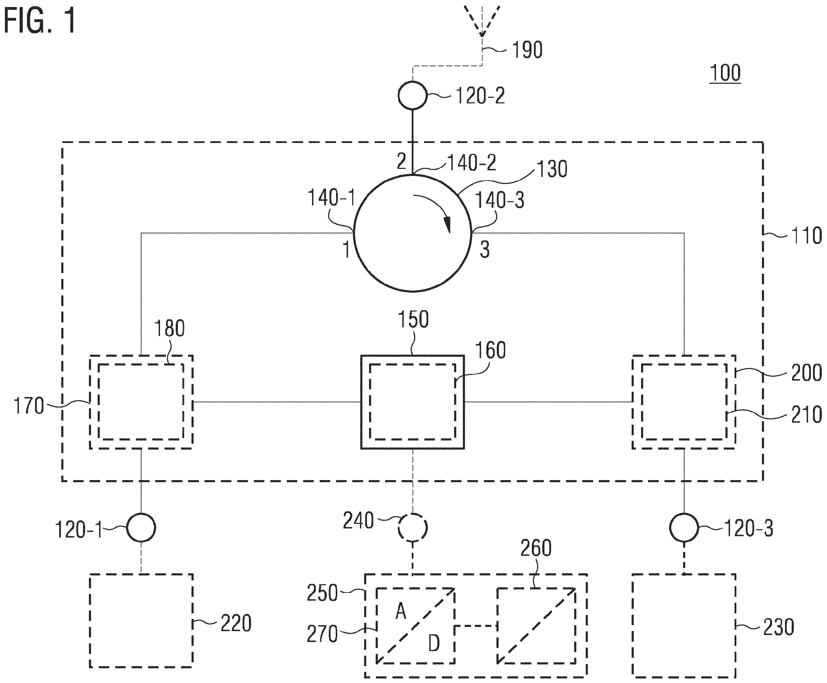

Fig. 1 shows a simplified block diagram of a system 100. The system comprises a filter 110 according to an embodiment. The filter 100 comprises a first terminal 120-1, a second terminal 120-2 and a third terminal 120-3. Each of the terminals 120 may be implemented according to its later application-specific requirements. In general, a terminal is a point at which a conductor or a conductive structure from an electrical component, device, structure or network may be electrically coupled to another electrical component, device, structure, network or external circuit. For instance, each of the terminals may, irrespective of the implementations of the other terminals, be implemented as an end of a wire, an accessible portion of a wire, a connector, a pin, a fastener or any other suitable form to electrically connect the filter 110 to other components.

The filter 110 further comprises a circulator 130, which is implemented as a three terminal circulator. Accordingly, the circulator 130 comprises a first terminal 140-1 ("1"), a second terminal 140-2 ("2") and a third terminal 140-3 ("3"). The first terminal 140-1 of the circulator 130 is coupled to the first terminal 120-1 of the filter 110, the second terminal 140-2 is coupled to the second terminal 120-2 of the filter 110 and the third terminal 140-3 is coupled to the third terminal 120-3 of the filter 110. Although in the Fig. 1 the circulator 130 is depicted as a three terminal circulator 130, in principle also circulators with a higher number of terminals 140 may be used.

The circulator 130 may be implemented as a clockwise circulator. The term "clockwise" refers to the specific properties and characteristics of the circulator 130. Based on the numbering or designation of the terminals 140 of the circulator 130, a signal provided to the first terminal 140-1 is transmitted to the second terminal 140-2 of the circulator 130. However, a similar signal in the opposite direction from the second terminal 140-2 to the first terminal 140-1 is under ideal circumstances blocked and in more real implementations at least attenuated. In other words, a signal transport from the first terminal 140-1 to the second terminal 140-2 is possible, while under ideal circumstances a signal transport in the opposite direction is not.

Similarly, a signal transport from the second terminal 140-2 to the third terminal 140-3 and from the third terminal 140-3 to the first terminal 140-1 is possible, while in the opposite direction from the third terminal 140-3 to the second terminal 140-2 and from the first terminal 140-1 to the third terminal 140-3 a corresponding signal transport is suppressed or at least attenuated in a three terminal clockwise circulator.

In other words, for an ideal clockwise circulator 130 comprising N terminals 140-1, ..., 140-N the S-matrix is equal to

$$C = (c_{ij}) = \begin{pmatrix} 1; \text{if } \big((j = i - 1) \text{ and } (i > 1)\big) \text{ or } \big((i = 1) \text{ and } (j = N)\big) \\ 0; \text{else} \end{pmatrix}$$

where $i$ and $j$ are the indices of the rows and the columns of the S-matrix $C$, respectively. Both indices $i$ and $j$ are integers in the range between 1 and $N$. In other words, the elements $c_{ij}$ of the S-matrix $C$ are equal to 1, when $j = i - 1$ and $i$ is larger than 1 and smaller than or equal to $N$, or when $i$ is equal to 1 and $j$ is equal to $N$. In all other cases, the elements $c_{ij}$ of the S-matrix $C$ are equal to 0.

Similarly, an ideal N-terminal anticlockwise circulator is defined by the S-matrix

$$A = (a_{ij}) = \begin{pmatrix} 1; \text{if } \big((i = j - 1) \text{ and } (j > 1)\big) \text{ or } \big((j = 1) \text{ and } (i = N)\big) \\ 0; \text{else} \end{pmatrix}$$

for $i$ and $j$ being once again the indices of the S-matrix $A$ rows and columns in the range from 1 to $N$, respectively. In other words, the elements $a_{ij}$ of the S-matrix $A$ are equal to 1, when $i = j - 1$ and $j$ is larger than 1 and smaller than or equal to $N$, or when $j$ is equal to 1 and $i$ is equal to $N$. In all other cases, the elements $a_{ij}$ of the S-matrix $A$ are equal to 0.

A circulator may, for instance, be implemented based on a ferrite material. These ferrite circulators comprise a magnetized ferrite material and may, for instance, be based on the principle of Faraday rotation of waves propagating in a magnetized material. However, circulators may also be implemented based on different technical solutions. Such non-ferrite circulators, for instance, may be based on transistors, varactors or other active circuits to name just a few examples.

The filter 110 further comprises a controllable analog amplitude and/or phase-shifter circuit 150, which is coupled with an input to the first terminal 120-1 of the filter 110 and with an output to the third terminal 120-3 of the filter 110. The phase-shifter circuit 150 is specifically designed and, hence, configured to generate a phase-shifted signal, which is based on an analog radio-frequency input signal provided to the first terminal 120-1 of the filter 110. The phase-shifted signal is shifted by a predetermined phase shift in the phase domain. Since the output of the phase-shifter circuit 150 is coupled to the third terminal 120-3 of the filter 110, the phase-shifted signal in the system 150 in Fig. 1 is provided to the third terminal 120-3 of the filter 110.

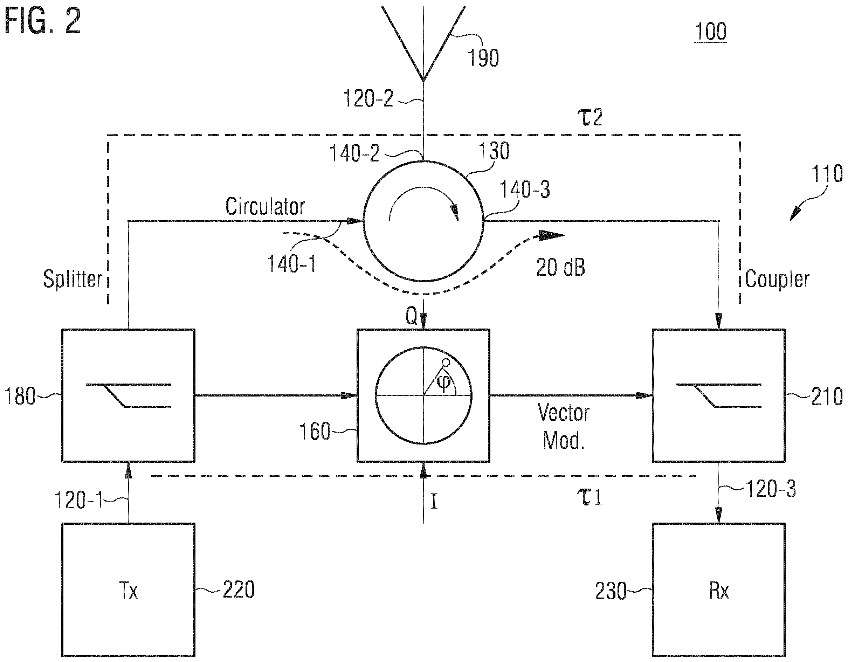

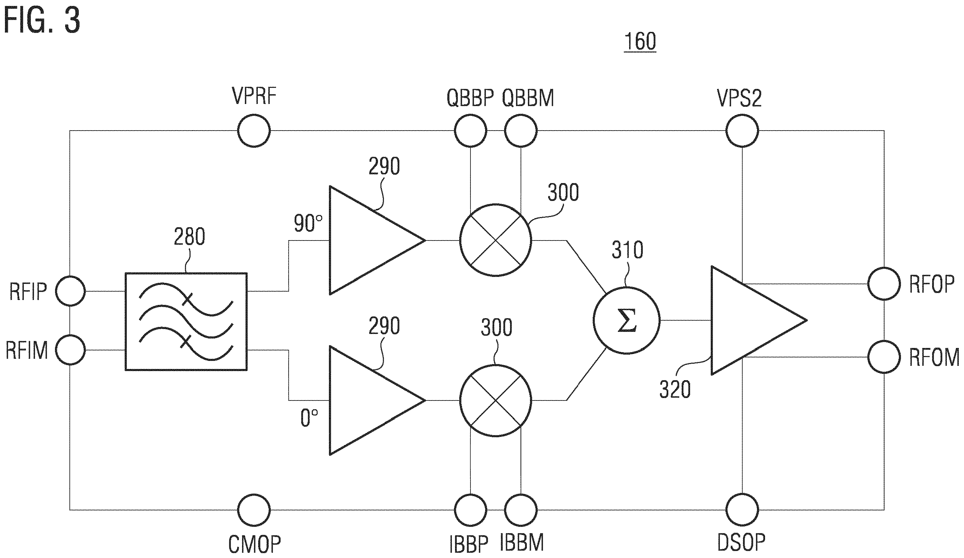

As will be explained in more detail below in the context of Figs. 2 and 3, the phase-shifter circuit 150 may, for example, comprise a vector modulator 160, which is specifically designed and, hence, configured to phase-shift a signal in the phase domain. However, details concerning an implementation of a vector modulator 160 will be given below.

The filter 110 as depicted in Fig. 1 comprises, as an optional component, a splitter 170, which is coupled with an input to the first terminal 120-1 of the filter 110 and with a first output to the first terminal 140-1 of the circulator 130. A second output of the splitter 170 is coupled to the input of the phase-shifter circuit 150. The splitter 170 splits during operation the analog radio-frequency input signal provided to the first terminal 120-1 of the filter 110 and, hence, to the input of the splitter 170 into a first signal at its first output and a second signal at its second output. In other words, the first signal is provided to the first terminal 140-1 of the circulator 130, while the second signal is provided to the input of the phase-shifter circuit 150.

In other filters 110 the splitter 170 may not be directly coupled to the first terminal 120-1 of the filter 110. In such a case, the signal provided to the input of the splitter 170 may eventually be a signal derived from the input signal provided to the first terminal 120-1 of the filter 110. In other implementations, the circulator 130 and/or the phase-shifter circuit 150 may not be directly coupled to the outputs of the splitter 170. In such a case the signals provided to the circulator 130 and the phase-shifter circuit 150 may not be the first and second signals, but signals derived from the first and second signal, respectively. As will be outlined in more detail below, the splitter 170 may, for instance, comprise a power splitter 180, which splits the input signal into the first and second signals having spectral densities being essentially proportional to one another with respect to a power or an amplitude on a linear or logarithmic scale as functional frequency.

Depending on the implementation, the spectral densities of a first and/or second signal may further be proportional in terms of power or amplitude on a logarithmic or linear scale as a functional frequency to the respective spectral density of the input signal.

The power splitter 180 may distribute the power of the incoming input signal to the first and second signals in a wide range of possibilities, which may, for instance, depend on the implementation of the filter and the operational circumstances later encountered. For instance, the power of the first signal and the power of the second signal may be equal, which may provide the phase-shifter circuit 150 with enough energy to allow even a high degree of attenuation at the notch or target frequency in adverse conditions. However, the energy going into the second signal is not available for transmission by an antenna 190, which may be coupled to the second terminal 120-2 of the filter 100. In other words, implementing a power splitter 180 providing a comparably high amount of energy to the second signal and, hence, to the phase-shifter circuit 150 may result in a higher energy consumption of an overall system 100.

Depending on the implementation, operational parameters and other circumstances, it may be advisable under some circumstances to implement the splitter 170 or power splitter 180 in such a way that a ratio of the power of the first signal with respect to the second signal is not equal to 1, which corresponds to identical powers, but higher, for instance at least 2, at least 5 or at least 10. By implementing the splitter 170 or power splitter 180 in this way, a higher degree of energy may be used for the actual transmission via the antenna 190 and yet - depending on the implementation and operational parameters - a high degree of attenuation at the notch or target frequency may be achievable.

The question how much energy the second signal should comprise depends on a large number of parameters. The first parameter concerns the filter 110 and, more precisely, the circulator 130. In real life implementations, the previously described ideal transmission characteristics of the circulator 130 are typically not achievable. Although the signal provided to the first terminal 140-1 of the circulator 130 should under ideal circumstances only be transmitted to the second terminal 140-2 in the case of a clockwise circulator, in real-life implementations some signal portions may also be transmitted to other terminals such as the third terminal 140-3 which is coupled to the third terminal 120-3 of the filter 110. This parasitic effect of the circulator 130 may represent one source of the analog radio-frequency input signal provided to the first terminal 120-1 of the filter 110 being coupled to the third terminal 120-3 of the filter 110 in an attenuated form.

A further filter-related parameter, which may influence the implementation of the splitter 170 or power splitter 180, is an amplification capability of the phase-shifter circuit 150 or the vector multiplier 160. Instead of taking the necessary energy from the second signal, depending on the capabilities and performance of the power shifter circuit 150 and optionally the vector modulator 160, the energy for the phase-shifted signal may also be taken from an external power source instead of the analog radio-frequency input signal. Hence, the splitter 170 or power splitter 180 with a higher power of the first signal may eventually be used in such a case.

However, also due to other effects of the filter 110 and of other components of the system 100 such a coupling of the input signal from the first terminal 120-1 to the third terminal 120-3 of the filter 110 may occur. For instance, in the case of a mismatch of the antenna 190, a signal may be coupled in an attenuated form from the first terminal 120-1 via the first terminal 140-1 and the second terminal 140-2 of the circulator 130 to the second terminal 120-2 of the filter 110 and further to the antenna 190. Due to the mismatch, a portion of the signal may be reflected and coupled again into the second terminal 120-2 of the filter 110 and, accordingly, from the second terminal 140-2 of the circulator 130 to the third terminal 140-3 of the circulator 130 and then onto the third terminal 120-3 of the filter 110. In other words, even in the case of an ideal circulator 130, the signal provided to the first terminal 120-1 may be coupled via parasitic effect such as a mismatch of the antenna 190 to the third terminal 120-3 of the filter 110.

If these and other effects are of lesser importance, it may be possible for the splitter 170 or the power splitter 180 to provide more energy to the first signal than to the second signal. However, if under adverse circumstances a significant portion of the energy of the signal may have to be transferred from the first terminal 120-1 to the third terminal 120-3 of the filter 110, it may eventually be advisable to provide the phase-shifter circuit 150 with more energy and, hence, with more energy of the second signal than in other cases.

To couple the third terminal 140-3 of the circulator 130 as well as the output of the phase-shifter circuit 150 to the third terminal 120-3 of the filter 110, a filter 110 may comprise as an optional component a coupler 200, which is coupled with a first input to the third terminal 140-3 of the circulator 130, with a second input to the output of the power shifter circuit 150, and with an output to the third terminal 120-3 of the filter 110. The coupler may then generate an output signal, which may once again be an analog radio-frequency output signal, based on the phase-shifted signal from the phase shifter circuit and based on the input signal or a fraction thereof coupled from the first terminal 120-1 to the third terminal 120-3 of the filter 110. Once again, the coupler 200 may comprise a power coupler 210 which may operate similarly to the power splitter 180 of the splitter 170. Depending on the implementation details, the coupler 200 or power coupler 210 may be essentially identical to the splitter 170 or power splitter 180, respectively. However, depending on the capabilities, especially the amplification provided by the phase-shifter circuit 150 or its vector modulator 160, also different implementations concerning the coupler 170 or power coupler 180 and the splitter 200 or the power splitter 210 may be used.

In case the power coupler 180 generates the first and second signals having the same power, the splitter 170 or power splitter 180 is also referred to as 3dB-splitter. Similarly, when the coupler 200 or the power coupler 210 does not differently weigh the signals provided to its two inputs mentioned before, the coupler 200 or power coupler 210 may also be referred to as a 3dB-coupler.

The system 100 may further comprise a transmitter circuit 220 coupled to the first terminal 120-1 of the filter 110. The transmitter circuit 220 may be that of a transmitter or a transceiver. A transceiver is a circuit, device or system which comprises at least one transmitter circuit and at least one receiver circuit. The transmitter circuit and the receiver circuit may comprise common components or other pieces of infrastructure. For instance, the filter 110 as depicted in Fig. 1 may be part of the transceiver and the common components of the infrastructure.

The transmitter circuit 220 may be in principle any suitable radio-frequency transmitter circuit. It may be specifically designed to encode digital information and to generate a corresponding analog radio-frequency signal to be transmitted via the antenna 190 to name just one example. However, the transmitter circuit may also be a transmitter circuit for transmitting analog encoded signals. Accordingly, the transmitter circuit 220 may comprise a modulator to encode or modulate the analog or digital information based on a baseband oscillator signal generated, for instance, by a local oscillator (LO), one or more filters, a mixer to up-mix the signal into an intermediate frequency regime or the radio-frequency regime (RF regime), further filters operating in the radio-frequency regime and a radio-frequency power amplifier. The components mentioned are by far not required to be implemented in all receiver circuits 220. Moreover, the order in which these components have been described may vary. Some components may also be part of a larger circuit or may be digitally implemented to name just a few examples.

The transmitter circuit 220 generates at its output the analog radio-frequency input signal for the filter 110. Via the antenna 190 the input signal is then transmitted wirelessly.

Similarly, the filter 110 may further comprise a receiver circuit 230, which may be coupled with an input to the third terminal 120-3 of the filter 110. The receiver circuit 230 may also be part of a receiver, the transceiver mentioned before or a further transceiver. For instance, the receiver circuit 230 may operate according to a different protocol, technology or standard compared to the transmitter circuit 220. For instance, the transmitter circuit 220 may be part of a cellular phone system, while the receiver circuit 230 may be part of an infotainment system and designed to receive and process analog or digital broadcast services such as DVB-T.

The receiver circuit 230 may comprise an amplifier such as a low noise amplifier (LNA), one or more filters operating in the radio-frequency regime, a mixer to down-mix the radio-frequency signal into an intermediate frequency regime or the baseband regime and, for instance, a demodulator or an analog-to-digital-converter (ADC) to further process the received signal. For instance, in the case of a receiver circuit 230 designed to receive a signal comprising analog encoded signals, the demodulator may be used to separate the analog encoded information from an carrier frequency, which may be generated by a local oscillator. In the case of digitally encoded information, the receiver circuit 230 may comprise a digital processing unit such as a central processing unit (CPU) to process the received data in the digital domain. Here the signals may be further filtered or processed, to name just one example.

Independently of one another, the transmitter circuit 220 and/or the receiver circuit 230 may be specifically designed and, hence, configured such that the input signal of the filter 110 and/or the output signal of the filter 110, respectively, comprise at least one of a plurality of frequencies or a finite frequency range. The finite frequency range may, for instance, comprise a finite reference frequency range or, for instance, a payload frequency range. In other words, the transmitter circuit 220 may be designed to transmit a signal comprising a plurality of frequencies or a finite frequency range, while, independently of the transmitter circuit, the receiver circuit 230 may be designed to receive a signal comprising a plurality of frequencies or a finite frequency range. Accordingly, the filter 110 may also be configured such that the analog radio-frequency input signal and/or the analog radio-frequency output signal of a filter 110 comprises a plurality of frequencies and/or a finite frequency range.

Returning to the phase-shifter circuit 150, to allow the target or notch frequency to be more easily controllable, the phase-shifter circuit 150 may generate the phase-shifted signal with the phase shift being controllable by at least one control signal. Depending on the implementation, not only the phase shift, but also an amplitude of the phase-shifted signal may be controllable by the at least one control signal. By controlling both the predetermined phase shift as well as the amplitude of the phase-shifted signal, a degree of attenuation at the target or notch frequency may be more easily and more precisely controllable. Under ideal circumstances, a relative phase shift of the signal coupled from the first terminal 120-1 to the third terminal 120-3 of the filter 110 and of the phase-shifted signal is 180° or $\pi$ and the amplitudes are equal. Under these conditions, a complete destructive interference may be achievable at the target or notch frequency. In case the phase shift and/or the amplitudes are not matched, the degree of attenuation and, therefore, the degree of destructive interference at the target or notch frequency is less perfect. In this case, instead of the complete removal of the respective target or reference frequency component, attenuation is achievable.

To allow the phase-shifter circuit 150 or, for instance, the vector modulator 160 to receive the at least one control signal, the filter 110 may comprise one or more control terminals 240 to which the control circuit 250 may be coupled. The control circuit 250 may be part of the system 100 or may be part of the filter 110. The control circuit 250 may during operation provide the at least one control signal via the control terminal 240 to the phase-shifter circuit 150.

The control circuit 250 may be a digital control circuit comprising a digital processing unit 260 allowing a software- or program-control of the filter 110. The digital processing unit may, for instance, comprise a central processing unit (CPU) or another processor-based hardware. The digital processing unit 260 may then generate a digital signal, which may be converted into the at least one analog control signal by a digital-to-analog converter (DAC) 270. The DAC 270 may then be coupled, for instance, via the control terminal 240 to the phase-shifter circuit 150 of the filter 110.

By using a filter 110 as depicted, for instance, in Fig. 1, a coexistence interference management system for vehicles or other applications may be implemented. By controlling the phase shift of a phase-shifter circuit 150 and, optionally, an amplitude of a generated phase-shifted signal, an interference of a signal generated by the transmitter circuit 220 may be reduced or even eliminated. The filter 110 may, therefore, allow implementing a frequency-agile architecture to cancel self-generated interfering signals before reaching any blocking-sensitive components in the receiving path of the receiver circuit 230.

As outlined before, the architecture of the system 100 shown in Fig. 1 may, for instance, be used within a multiservice radio front end, which serves multiple wireless services at the same time. By inverting the interfering signal and superposing the original signal any unwanted signal components, which have coupled in the receiving path at higher power may cancel due to destructive interference. The procedure is to some extent comparable to noise cancelling headphones.

Fig. 2 shows a block diagram of an architecture of a system 100 comprising a further filter 110 according to an embodiment. The system 100 shown in Fig. 2 also comprises the three terminals 120-1, 120-2 and 120-3, the circulator 130 with its three terminals 140-1, 140-2 and 140-3 and, as the phase-shifter circuit 150 the vector modulator 160. The circulator 130 depicted in Fig. 2 is indicated as a non-ideal circulator 130 having a signal coupling from the first terminal 140-1 to the third terminal 140-3 with an attenuation of 20dB. In the embodiment depicted in Fig. 2, the splitter 170 is implemented as a 3dB-power splitter 180. The filter 110 also comprises a power coupler 210 coupling the output of the vector modulator 160 and a third terminal 140-3 at the circulator 130 to the receiver circuit 230. The first terminal 120-1 of the filter 110 is coupled to a transmitter circuit 220.

As will be outlined in more detail below, the vector modulator 160 is controlled in the embodiment shown here by two control signals which are referred to as I-signal and Q-signal. The I-control signal controls an in-phase component of the signal provided to the vector modulator 160 having a phase shift of 0°, while the Q-control signal controls the so-called quadrature component of the signal having a phase shift of 90°. By controlling the ratio of the I- and Q-control signals, a phase $\varphi$ of the phase-shifted signal generated by the vector modulator 160 is controllable. Furthermore, by controlling the amplitudes of the I- and Q-control signals, the amplitude of the phase-shifted signal can also be controlled.

The architecture depicted in Fig. 2 may, for instance, be used for a parallel transmission of LTE (long-term evolution) signals, while receiving a broadcasting service. Furthermore, the architecture of the system 100 shown in Fig. 2 may be used for a parallel activity of a vehicular cellular connectivity module and, for instance, a driver's mobile device, which may be both connected or coupled to a roof-top antenna 190 for mitigating a shielding effect of the car body. Naturally, also further applications may benefit from the architecture depicted in Fig. 2.

Fig. 3 shows a block diagram of a vector modulator 160 will be given. The vector modulator 160 depicted in Fig. 3 is capable of processing both, single-ended and differential signals. As a consequence, the signal ports each have a positive (P; plus) and a negative (M; minus) counterpart to which a differential signal may be supplied. The last characters of the port or terminal designation indicate their respective polarity. In the case of a single-ended signal, one of the respective ports may be coupled to a reference potential such as ground.

The vector modulator 160 depicted in Fig. 3 comprises two ports for a radio-frequency input signal RFIP, RFIM (RF = radio frequency; I = input; P = plus; M = minus), which are coupled to a splitter circuit 280, which is specifically designed and configured to generate an in-phase signal I (0°) and a quadrature signal Q (90°). Each of the signals is then provided to an optional amplifier 290 before being fed to a controllable multiplier 300 for each of the signals. The multipliers 300 may be controlled by corresponding low frequency or baseband control signals (I-control signal; Q-control signal) which are referred to in Fig. 3 as IBBP, IBBM (I = in-phase component; BB = baseband; P = plus; M = minus) for the in-phase component and QBBP and QBBM (Q = quadrature component; BB = baseband; P = plus; M = minus) for the quadrature signal, respectively. The multiplied in-phase signal and quadrature signals are then added by an adder 310 before being provided to an optional amplifier 320 before being provided to corresponding radio-frequency output ports RFOP, RFOM (RF = radio frequency; O = output; P = plus; M = minus), respectively.

As indicated earlier, the mentioned ports of the vector modulator 160 shown in Fig. 3 are designed for differential signals such that the last letter of each of the labels is either P (plus) for the positive signal component or M (minus) for the negative component.

Fig. 3 further shows two ports referred to as VPRF and VPS2, which are used for the power supply of a vector modulator 160. The port CMOP refers to a port to which a reference potential can be coupled. The port DSOP coupled to the optional amplifier 160 can be used to disable the outputs RFOP, RFOM of the vector modulator 160.

Returning to the principles of operation of the filter 110, in the case of a single continuous sinewave signal with a frequency f at the input, the continuous wave sine signal is split into the first and second signals and provided to the circulator 130 and the phase shifter circuit 150 comprising, for instance, the vector modulator 160. Due to the phase shifter circuit 150, the phase of the sinewave can be controllably adjusted by the I-control signal and the Q-control signal. For a single sinewave it is possible to translate the delay caused by the overall delay caused by the coupling from the first terminal 120-1 to the third terminal 120-3 of the filter 110 via the circulator 130 into an equivalent phase. It is therefore possible to determine one particular set of values for the I- and Q- control signals, which perform a turn of the phase of the input signal by 180° (or $\pi$) so that the cancellation with the original signal can take place and the phase of the input signal can be adjusted by an additional amount to compensate for the time delay caused by coupling the signal via the circulator from the first 120-1 to the third terminal 120-3 of the filter 110. If controlled correctly, the delayed sinewave will be added to an inverted sinewave passing through the phase shifter circuit 150. The sinewaves will cancel. This will be the center of the notch.

The I- and Q- control signals will, however, only cancel the continuous sinewave of frequency f completely. For sinewaves slightly above or below the frequency f, the phase shift will still be essentially the same as it was for the signal at the frequency f. However, the time delay between the two signal paths will cause the signals to arrive at the coupler 200 or 210 representing the summing node at slightly different times, thus not canceling perfectly any more. The further away from the frequency of f, the lesser the cancellation effect is. As a result, an overall notch response is formed with a notch frequency f. For multiples of the frequency f, a point of cancellation reappears, turning the broadband response into the one of a comb filter.

The I- and Q- control signals may be derived in an analog fashion by using one or more DACs 270 as depicted in Fig. 1. Their values can be controlled by a software or program running on the corresponding processing unit 260. Thus, the notch response can be software defined. The filter 110 may therefore be able to be operated as a highly dynamic analog filter under software control.

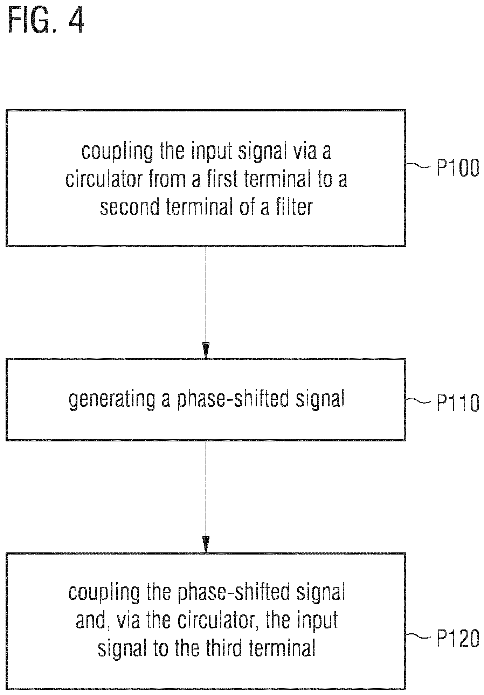

Fig. 4 shows a flowchart of a method for at least partially isolating the third terminal 120-3 of the filter 110 from the first terminal 120-1 of the filter 110. In the process P100, the method comprises coupling an analog radio-frequency input signal from the first terminal 120-1 of the filter 110 via a first terminal 140-1 of the circulator 130 to a second terminal 120-2 of the filter 110 coupled to a second terminal 140-2 of the circulator 130. In a process

P110, a phase-shifted signal may be generated based on the input signal at the first terminal 120-1 of the filter 110, which is shifted by a predetermined phase shift in the phase domain. In a process P120, the phase-shifted signal or a signal derived from the phase-shifted signal and, via the circulator 130, the input signal from the first terminal 120-1 of the filter 110 to the third terminal 120-3 of the filter 110 is coupled.

Optionally, the method may further comprise determining the phase shift and using the determined phase shift as the predetermined phase shift.

The filter 110 and other embodiments may allow a coexisting operation of multiple wireless services. It may provide flexible properties due to the re-configurability and frequency agility. Using a filter 110 or another embodiment may allow an adaptation to future changes and developments in the field of wireless connectivity.

The aspects and features mentioned and described together with one or more of the previously detailed examples and Figures, may as well be combined with one or more of the other examples in order to replace a like feature of the other example or in order to additionally introduce the feature to the other example.

Functions of various elements shown in the figures, including any functional blocks may be implemented in the form of dedicated hardware, such as a signal processing unit, a processor, a controller, etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple processes, operations or functions disclosed in the specification or claims are not limited to the specific order, unless explicitly or implicitly stated otherwise, for instance for technical reasons. Therefore, the disclosure of multiple processes, operations or functions does not limit these to a particular order unless these processes, operations or functions are not interchangeable for technical reasons. Furthermore, in some examples, a single process, function or operation may include or may be broken into multiple sub-functions, -processes or -operations. They may be included and part of the disclosure of this single act unless explicitly excluded.

The invention is defined by the appended claims.

**List of Reference Signs**

| 100 | system |
| 110 | filter |
| 120 | terminal |
| 130 | circulator |
| 140 | terminal |
| 150 | phase shifter circuit |
| 160 | vector modulator |
| 170 | splitter |
| 180 | power splitter |
| 190 | antenna |
| 200 | coupler |
| 210 | power coupler |
| 220 | transmitter circuit |
| 230 | receiver circuit |
| 240 | control terminal |
| 250 | control circuit |
| 260 | digital processing unit |
| 270 | DAC |
| 280 | splitter circuit |
| 290 | amplifier |
| 300 | multiplier |
| 310 | adder |
| 320 | amplifier |

P110    coupling
P120    generating a phase-shifted signal
P130    coupling

**Claims**

1.  A system (100) for a vehicle, the system (100) comprising a filter (110), a transmitter circuit (220) and a receiver circuit (230), the filter 110 comprising:

    a first terminal (120-1), a second terminal (120-2) and a third terminal (120-3);
    a circulator (130) coupled with a first terminal (140-1) to the first terminal (120-1) of the filter (110), with a second terminal (140-2) to the second terminal (120-2) of the filter (110) and with a third terminal (140-3) to the third terminal (120-3) of the filter (110); and
    a controllable analog phase shifter circuit (150) coupled with an input to the first terminal (120-1) of the filter (110) and with an output to the third terminal (120-3) of the filter (110), wherein the phase shifter circuit (150) is configured to generate, based on an analog radio-frequency input signal provided to the first terminal (120-1) of the filter (110), a phase-shifted signal shifted by a predetermined phase shift in the phase domain to couple the phase-shifted signal or a signal derived from the phase-shifted signal to the third terminal (120-3) of the filter (110),
    wherein the phase-shifted signal or the signal derived from the phase-shifted signal and, via the circulator (13), the input signal from the first terminal (120-1) are coupled at the third terminal (120-3),
    wherein the first terminal (120-1) of the filter (110) is coupled to an output of the transmitter circuit (220) to receive the analog radio-frequency input signal to be transmitted,
    wherein the third terminal (120-3) of the filter (110) is coupled to an input of a receiver circuit (230) to provide an analog radio-frequency output signal to be received,
    wherein the receiver circuit (230) is configured to operate according to a different protocol, a different technology or a different standard than the transmitter circuit (220).

2.  The system (100) according to claim 1, wherein the phase-shifter circuit (150) is configured to generate the phase-shifted signal with the phase shift being controllable by at least one control signal.

3.  The system (100) according to claim 2, wherein the phase-shifter circuit (150) is further configured to generate the phase-shifted signal with an amplitude being controllable by the at least one control signal.

4.  The system (100) according to any of claims 2 or 3, further comprising a control circuit (250) configured to generate the at least one control signal, wherein the predetermined phase shift, amplitude and a time delay of the analog radio-frequency input signal provided to the first terminal (120-1) of the filter (110) and coupled to the third terminal (120-3) of the filter (110) via the circulator (130), correspond to a predetermined notch frequency of the filter (110) causing the signal coupled to the third terminal (120-3) via the circulator (130) and the phase-shifted signal to at least partially destructively interfere at the notch frequency.

5.  The system (100) according to any of the claims 1 to 4, wherein the phase-shifter circuit (150) comprises a vector modulator (160).

6.  The system (100) according to claim 5, wherein the vector modulator (160) is configured to generate the phase-shifted signal with the phase shift being controllable by an I-control signal and a Q-control signal.

7.  The system (100) according to any of the claims 1 to 6, further comprising a splitter (170) coupled with an input to the first terminal (120-1) of the filter (110), with a first output to the first terminal (140-1) of the circulator (130) and with a second output to the input of the phase shifter circuit (150), wherein the splitter (170) is configured to split an analog radio-frequency signal provided to its input into at least a first signal at its first output and a second signal at its second output.

8.  The system (100) according to claim 7, wherein the splitter (170) comprises a power splitter (180).

9.  The system (100) according to any of the claims 1 to 8, further comprising a coupler (200) coupled with a first input to the third terminal (140-3) of the circulator (130), with a second input to the output of the phase shifter circuit (150) and with an output to the third terminal (120-3) of the filter (110), wherein the coupler (200) is configured to generate an output signal based on the phase-shifted signal from the phase shifter circuit (150) and based on an analog radio-frequency signal coupled from the first terminal (120-1) of the filter (110) to the third terminal (120-3) of the filter (110) via the circulator (130).

10. The system (100) according to claim 9, wherein the coupler (200) comprises a power coupler (210).

11. The system (100) according to any of the claims 1 to 10, wherein the second terminal (120-2) of the filter (110) is coupled to an antenna (190).

12. The system (100) according to one of the claims 1 to 11, wherein the different protocols, standards, or technologies of the receiver circuit (230) and the transmitter circuit (220) are two of the group of a cellular communication system, a digital video broadcasting system, a telematics system, a navigation satellite system, and a broadcasting system.

13. The system (100) according to one of the claims 1 to 12, wherein the transmitter circuit (220) and the receiver circuit (230) are implemented in dedicated electronic control units.

14. A method for at least partially isolating a third terminal (120-3) of a filter (110) from a first terminal (120-1) of the filter (110) in a system (100) for a vehicle, the system (100) comprising the filter (110), a transmitter circuit (220) and a receiver circuit (230), the method comprising:

coupling (PI00) an analog radio-frequency input signal from the first terminal (120-1) of the filter (110) via a first terminal (140-1) of a circulator (130) to a second terminal (120-2) of the filter (110) coupled to a second terminal (140-2) of the circulator (130), wherein the first terminal (120-1) of the filter (110) is coupled to an output of the transmitter circuit (220) to receive the analog radio-frequency input signal to be transmitted;
generating (P110), based on the input signal at the first terminal (120-1) of the filter (110), a phase-shifted signal shifted by a predetermined phase shift in the phase domain;
coupling (P120) the phase-shifted signal or a signal derived from the phase-shifted signal and, via the circulator (130), the input signal from the first terminal (120-1) of the filter (110) to the third terminal (120-3) of the filter (110), wherein the third terminal (120-3) of the filter (110) is coupled to an input of a receiver circuit (230) to provide an analog radio-frequency output signal to be received; and
operating the receiver circuit (230) according to a different protocol, a different technology or a different standard than the transmitter circuit (220).

**Patentansprüche**

1. Ein System (100) für ein Fahrzeug, wobei das System (100) ein Filter (110), eine Senderschaltung (220) und eine Empfängerschaltung (230) umfasst, das Filter 110 umfassend:

einen ersten Anschluss (120-1), einen zweiten Anschluss (120-2) und einen dritten Anschluss (120-3);
einen Zirkulator (130), der mit einem ersten Anschluss (140-1) mit dem ersten Anschluss (120-1) des Filters (110), mit einem zweiten Anschluss (140-2) mit dem zweiten Anschluss (120-2) des Filters (110) und mit einem dritten Anschluss (140-3) mit dem dritten Anschluss (120-3) des Filters (110) gekoppelt ist; und
eine steuerbare analoge Phasenschieberschaltung (150), die mit einem Eingang mit dem ersten Anschluss (120-1) des Filters (110) und mit einem Ausgang mit dem dritten Anschluss (120-3) des Filters (110) gekoppelt ist, wobei die Phasenschieberschaltung (150) ausgebildet ist, um basierend auf einem analogen Radiofrequenz-Eingangssignal, das an den ersten Anschluss (120-1) des Filters (110) bereitgestellt wird, ein phasenverschobenes Signal, das um eine vorbestimmte Phasenverschiebung in dem Phasenbereich verschoben ist, zu erzeugen, um das phasenverschobene Signal oder ein Signal, das von dem phasenverschobenen Signal hergeleitet ist, mit dem dritten Anschluss (120-3) des Filters (110) zu koppeln,
wobei das phasenverschobene Signal oder das von dem phasenverschobenen Signal hergeleitete Signal und, über den Zirkulator (13), das Eingangssignal von dem ersten Anschluss (120-1) mit dem dritten Anschluss (120-3) gekoppelt sind,
wobei der erste Anschluss (120-1) des Filters (110) mit einem Ausgang der Senderschaltung (220) gekoppelt ist, um das analoge Radiofrequenz-Eingangssignal zu empfangen, das gesendet werden soll,
wobei der dritte Anschluss (120-3) des Filters (110) mit einem Eingang einer Empfängerschaltung (230) gekoppelt ist, um ein analoges Radiofrequenz-Ausgangssignal bereitzustellen, das empfangen werden soll,

wobei die Empfängerschaltung (230) ausgebildet ist, um gemäß einem unterschiedlichen Protokoll, einer unterschiedlichen Technologie oder einem unterschiedlichen Standard als die Senderschaltung (220) zu arbeiten.

2. Das System (100) gemäß Anspruch 1, wobei die Phasenschieberschaltung (150) ausgebildet ist, um das phasenverschobene Signal zu erzeugen, wobei die Phasenverschiebung durch das mindestens eine Steuersignal steuerbar ist.

3. Das System (100) gemäß Anspruch 2, wobei die Phasenschieberschaltung (150) ferner ausgebildet ist, um das phasenverschobene Signal mit einer Amplitude zu erzeugen, die durch das mindestens eine Steuersignal steuerbar ist.

4. Das System (100) gemäß einem der Ansprüche 2 oder 3, ferner umfassend eine Steuerschaltung (250), die ausgebildet ist, um das mindestens eine Steuersignal zu erzeugen, wobei die vorbestimmte Phasenverschiebung, Amplitude und eine Zeitverzögerung des analogen Radiofrequenz-Eingangssignals, das an den ersten Anschluss (120-1) des Filters (110) bereitgestellt wird und mit dem dritten Anschluss (120-3) des Filters (110) über den Zirkulator (130) gekoppelt ist, einer vorbestimmten Notchfrequenz des Filters (110) entsprechen, wodurch verursacht wird, dass das Signal, das über den Zirkulator (130) mit dem dritten Anschluss (120-3) gekoppelt ist, und das phasenverschobene Signal die Notchfrequenz zumindest teilweise störend beeinflussen.

5. Das System (100) gemäß einem der Ansprüche 1 bis 4, wobei die Phasenschieberschaltung (150) einen Vektormodulator (160) umfasst.

6. Das System (100) gemäß Anspruch 5, wobei der Vektormodulator (160) ausgebildet ist, um das phasenverschobene Signal mit der Phasenverschiebung, die durch ein I-Steuersignal und ein Q-Steuersignal steuerbar ist, zu erzeugen.

7. Das System (100) gemäß einem der Ansprüche 1 bis 6, ferner umfassend einen Splitter (170), der mit einem Eingang mit dem ersten Anschluss (120-1) des Filters (110), mit einem ersten Ausgang mit dem ersten Anschluss (140-1) des Zirkulators (130) und mit einem zweiten Ausgang mit dem Eingang der Phasenschieberschaltung (150) gekoppelt ist, wobei der Splitter (170) ausgebildet ist, um ein analoges Radiofrequenzsignal, das an seinen Eingang bereitgestellt wird, in mindestens ein erstes Signal an seinem ersten Ausgang und ein zweites Signal an seinem zweiten Ausgang zu splitten.

8. Das System (100) gemäß Anspruch 7, wobei der Splitter (170) einen Leistungs-Splitter (180) umfasst.

9. Das System (100) gemäß einem der Ansprüche 1 bis 8, ferner umfassend einen Koppler (200), der mit einem ersten Eingang mit dem dritten Anschluss (140-3) des Zirkulators (130), mit einem zweiten Eingang mit dem Ausgang der Phasenschieberschaltung (150) und mit einem Ausgang mit dem dritten Anschluss (120-3) des Filters (110) gekoppelt ist, wobei der Koppler (200) ausgebildet ist, um ein Ausgangssignal zu erzeugen, basierend auf dem phasenverschobenen Signal von der Phasenschieberschaltung (150) und basierend auf einem analogen Radiofrequenzsignal, das von dem ersten Anschluss (120-1) des Filters (110) mit dem dritten Anschluss (120-3) des Filters (110) über den Zirkulator (130) gekoppelt ist.

10. Das System (100) gemäß Anspruch 9, wobei der Koppler (200) einen Leistungs-Koppler (210) umfasst.

11. Das System (100) gemäß einem der Ansprüche 1 bis 10, wobei der zweite Anschluss (120-2) des Filters (110) mit einer Antenne (190) gekoppelt ist.

12. Das System (100) gemäß einem der Ansprüche 1 bis 11, wobei die unterschiedlichen Protokolle, Standards oder Technologien der Empfängerschaltung (230) und der Senderschaltung (220) zwei aus der Gruppe eines zellulären Kommunikationssystems, eines digitalen Videorundfunksystems, eines Telematiksystems, eines Navigationssatellitensystems und eines Rundfunksystems sind.

13. Das System (100) gemäß einem der Ansprüche 1 bis 12, wobei die Senderschaltung (220) und die Empfängerschaltung (230) in dedizierten elektronischen Steuerungseinheiten implementiert sind.

14. Ein Verfahren zum zumindest teilweisen Isolieren eines dritten Anschlusses (120-3) eines Filters (110) von einem ersten Anschluss (120-1) des Filters (110) in einem System (100) für ein Fahrzeug, wobei das System (100) das Filter (110), eine Senderschaltung (220) und eine Empfängerschaltung (230) umfasst, das Verfahren umfassend:

Koppeln (PI00) eines analogen Radiofrequenz-Eingangssignals von dem ersten Anschluss (120-1) des Filters (110) über einen ersten Anschluss (140-1) eines Zirkulators (130) mit einem zweiten Anschluss (120-2) des Filters (110), das mit einem zweiten Anschluss (140-2) des Zirkulators (130) gekoppelt ist, wobei der erste Anschluss (120-1) des Filters (110) mit einem Ausgang der Senderschaltung (220) gekoppelt ist, um das analoge Radiofrequenz-Eingangssignal zu empfangen, das gesendet werden soll;

Erzeugen (P110), basierend auf dem Eingangssignal an dem ersten Anschluss (120-1) des Filters (110), eines phasenverschobenen Signals, das um eine vorbestimmte Phasenverschiebung in dem Phasenbereich verschoben ist;

Koppeln (P120) des phasenverschobenen Signals oder eines Signals, das von dem phasenverschobenen Signal hergeleitet ist, und, über den Zirkulator (130), des Eingangssignals von dem ersten Anschluss (120-1) des Filters (110) mit dem dritten Anschluss (120-3) des Filters (110), wobei der dritte Anschluss (120-3) des Filters (110) mit einem Eingang einer Empfängerschaltung (230) gekoppelt ist, um ein analoges Radiofrequenz-Ausgangssignal bereitzustellen, das empfangen werden soll; und

Betreiben der Empfängerschaltung (230) gemäß einem unterschiedlichen Protokoll, einer unterschiedlichen Technologie oder einem unterschiedlichen Standard als die Senderschaltung (220).

## Revendications

1. Système (100) pour véhicule, le système (100) comportant un filtre (110), un circuit émetteur (220) et un circuit récepteur (230), le filtre 110 comportant :

   une première borne (120-1), une deuxième borne (120-2) et une troisième borne (120-3) ;
   un circulateur (130) couplé au moyen d'une première borne (140-1) à la première borne (120-1) du filtre (110), au moyen d'une deuxième borne (140-2) à la deuxième borne (120-2) du filtre (110) et au moyen d'une troisième borne (140-3) à la troisième borne (120-3) du filtre (110) ; et
   un circuit déphaseur analogique commandable (150) couplé au moyen d'une entrée à la première borne (120-1) du filtre (110) et au moyen d'une sortie à la troisième borne (120-3) du filtre (110), le circuit déphaseur (150) étant configuré pour générer, d'après un signal d'entrée analogique à radiofréquence fourni à la première borne (120-1) du filtre (110), un signal déphasé décalé d'un déphasage prédéterminé dans le domaine des phases pour coupleur le signal déphasé ou un signal tiré du signal déphasé à la troisième borne (120-3) du filtre (110), le signal déphasé ou le signal tiré du signal déphasé et, via le circulateur (13), le signal d'entrée provenant de la première borne (120-1) étant couplés au niveau de la troisième borne (120-3),
   la première borne (120-1) du filtre (110) étant couplée à une sortie du circuit émetteur (220) pour recevoir le signal d'entrée analogique à radiofréquence à émettre,
   la troisième borne (120-3) du filtre (110) étant couplée à une entrée d'un circuit récepteur (230) pour fournir un signal de sortie analogique à radiofréquence à recevoir,
   le circuit récepteur (230) étant configuré pour fonctionner selon un protocole différent, une technologie différente ou une norme différente de ceux du circuit émetteur (220).

2. Système (100) selon la revendication 1, le circuit déphaseur (150) étant configuré pour générer le signal déphasé avec un déphasage commandable par au moins un signal de commande.

3. Système (100) selon la revendication 2, le circuit déphaseur (150) étant en outre configuré pour générer le signal déphasé avec une amplitude commandable par le signal ou les signaux de commande.

4. Système (100) selon l'une quelconque des revendications 2 ou 3, comportant en outre un circuit (250) de commande configuré pour générer le signal ou les signaux de commande, le déphasage prédéterminé, l'amplitude et un retard temporel du signal d'entrée analogique à radiofréquence fourni à la première borne (120-1) du filtre (110) et couplé à la troisième borne (120-3) du filtre (110) via le circulateur (130), correspondant à une fréquence de coupure prédéterminée du filtre (110) amenant le signal couplé à la troisième borne (120-3) via le circulateur (130) et le signal déphasé à interférer de façon au moins partiellement destructive à la fréquence de coupure.

5. Système (100) selon l'une quelconque des revendications 1 à 4, le circuit déphaseur (150) comportant un modulateur vectoriel (160).

6. Système (100) selon la revendication 5, le modulateur vectoriel (160) étant configuré pour générer le signal déphasé avec un déphasage commandable par un signal de commande I et un signal de commande Q.

**7.** Système (100) selon l'une quelconque des revendications 1 à 6, comportant en outre un séparateur (170) couplé au moyen d'une entrée à la première borne (120-1) du filtre (110), au moyen d'une première sortie à la première borne (140-1) du circulateur (130) et au moyen d'une deuxième sortie à l'entrée du circuit déphaseur (150), le séparateur (170) étant configuré pour séparer un signal analogique à radiofréquence fourni à son entrée en au moins un premier signal au niveau de sa première sortie et un deuxième signal au niveau de sa deuxième sortie.

**8.** Système (100) selon la revendication 7, le séparateur (170) comportant un séparateur (180) de puissance.

**9.** Système (100) selon l'une quelconque des revendications 1 à 8, comportant en outre un coupleur (200) couplé au moyen d'une première entrée à la troisième borne (140-3) du circulateur (130), au moyen d'une première deuxième entrée à la sortie du circuit déphaseur (150) et au moyen d'une sortie à la troisième borne (120-3) du filtre (110), le coupleur (200) étant configuré pour générer un signal de sortie basé sur le signal déphasé provenant du circuit déphaseur (150) et sur un signal analogique à radiofréquence couplé de la première borne (120-1) du filtre (110) à la troisième borne (120-3) du filtre (110) via le circulateur (130).

**10.** Système (100) selon la revendication 9, le coupleur (200) comportant un coupleur (210) de puissance.

**11.** Système (100) selon l'une quelconque des revendications 1 à 10, la deuxième borne (120-2) du filtre (110) étant couplée à une antenne (190).

**12.** Système (100) selon l'une des revendications 1 à 11, les différents protocoles, normes ou technologies du circuit récepteur (230) et du circuit émetteur (220) étant deux éléments du groupe constitué d'un système cellulaire de communications, d'un système de diffusion vidéo numérique, d'un système télématique, d'un système satellitaire de navigation et d'un système de radiodiffusion.

**13.** Système (100) selon l'une des revendications 1 à 12, le circuit émetteur (220) et le circuit récepteur (230) étant mis en oeuvre dans des unités de commande électronique dédiées.

**14.** Procédé destiné à isoler au moins partiellement une troisième borne (120-3) d'un filtre (110) par rapport à une première borne (120-1) du filtre (110) dans un système (100) pour véhicule, le système (100) comportant le filtre (110), un circuit émetteur (220) et un circuit récepteur (230), le procédé comportant les étapes consistant à :

coupler (P100) un signal d'entrée analogique à radiofréquence de la première borne (120-1) du filtre, (110) via une première borne (140-1) d'un circulateur, (130) jusqu'à une deuxième borne (120-2) du filtre (110) couplée à une deuxième borne (140-2) du circulateur (130), la première borne (120-1) du filtre (110) étant couplée à une sortie du circuit émetteur (220) pour recevoir le signal d'entrée analogique à radiofréquence à émettre ;
générer (P110), d'après le signal d'entrée au niveau de la première borne (120-1) du filtre (110), un signal déphasé décalé d'un déphasage prédéterminé dans le domaine des phases ;
coupler (P120) le signal déphasé ou un signal tiré du signal déphasé et, via le circulateur (130), le signal d'entrée provenant de la première borne (120-1) du filtre (110) à la troisième borne (120-3) du filtre (110), la troisième borne (120-3) du filtre (110) étant couplée à une entrée d'un circuit récepteur (230) pour fournir un signal de sortie analogique à radiofréquence à recevoir ; et
faire fonctionner le circuit récepteur (230) selon un protocole différent, une technologie différente ou une norme différente de ceux du circuit émetteur (220).

FIG. 1

FIG. 2

EP 3 203 641 B1

FIG. 3

160

EP 3 203 641 B1

# FIG. 4

```
coupling the input signal via a          ~ P100
circulator from a first terminal to a
second terminal of a filter
```

```
generating a phase-shifted signal         ~ P110
```

```
coupling the phase-shifted signal         ~ P120
and, via the circulator, the input
signal to the third terminal
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2498332 A1
- US 20020032788 A1
- EP 2254195 A1
- WO 2008023096 A1
- WO 2014133625 A2
- US 20090227213 A1
- US 20050207509 A1
- US 7671720 B1